(19) Europäisches Patentamt

European Patent Office

Office européen des brevets

(11) **EP 0 976 320 A2**

(12) **EUROPÄISCHE PATENTANMELDUNG**

(43) Veröffentlichungstag:
02.02.2000 Patentblatt 2000/05

(51) Int. Cl.[7]: **A01G 9/24**, A01G 9/26

(21) Anmeldenummer: **99113528.6**

(22) Anmeldetag: **06.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.07.1998 IT RM980508**

(71) Anmelder:
**Sate Safety Devices Technology S.p.A.**
**84131 Salerno (IT)**

(72) Erfinder: **Scannapieco, Gaetano**
**84090 Giffoni sei Casali (SA) (IT)**

(74) Vertreter:
**Müller, Hans-Jürgen, Dipl.-Ing.**
**Müller, Schupfner & Gauger**
**Postfach 10 11 61**
**80085 München (DE)**

(54) **Steuer- und Regelvorrichtung sowie Steuer- und Regelverfahren**

(57) Eine Steuer- und Regelvorrichtung für ein Gebäude mit einem großen Anteil von gläsernen Fassadenteilen, durch die die innerhalb des Gebäudes herrschenden Temperaturverhältnisse sehr wesentlich von den klimatischen Bedingungen wie Sonneneinstrahlung abhängig sind, beispielsweise ein Gewächshaus, weist einen das Raumklima im Gebäude beeinflussenden Regler, der Stellmotoren für Fenster des Gebäudes betätigt. Der Regler (6) generiert Stellbefehle, die er einem ersten Steuerglied ($10^{1.2}$) zuleitet. Das erste Steuerglied ($10^{1.2}$) schaltet über Motorrelais ($9^1$, $9^2$) Motoren ($3^1$, $3^2$) nacheinander ein. Anschließend gelangt der Stellbefehl auf nachgeschaltete Steuerglieder ($10^{3.4}$, $10^{n-1.n}$), die ihrerseits weitere Motoren (3) nacheinander einschalten. Die im Stellbefehl enthaltene Richtungsinformation wird von den Steuergliedern (10) einem Phasenwendeschalter (11) zugeleitet, der die Phasen des die Motoren (3) antreibenden Drehstroms so schaltet, daß alle Motoren (3) nur entweder im Linkslauf oder im Rechtslauf laufen können. Durch die Erfindung wird erreicht, daß zu jedem Zeitpunkt immer nur ein einziger Motor (3) läuft. Damit wird die Maximalleistung minimiert, was in der Regel einen günstigen Stromtarif nach sich zieht, so daß die Betriebskosten vermindert werden können. Gleichzeitig ist der Aufbau sehr einfach, wodurch die Installationskosten niedrig sind.

Fig. 1

EP 0 976 320 A2

**Beschreibung**

Die Erfindung bezieht sich auf eine Steuer- und Regelvorrichtung gemäß dem Oberbegriff des Anspruchs 1 und auf ein Verfahren zum Steuern und Regeln gemäß dem Oberbegriff des Anspruchs 6.

Solche Steuer- und Regelvorrichtungen werden vorteilhaft dann verwendet, wenn Gebäude hinsichtlich ihrer im Inneren herrschenden Temperaturverhältnisse sehr wesentlich von den klimatischen Bedingungen abhängig sind. Gebäude solcher Art sind beispielsweise Gewächshäuser, aber auch große Wintergärten und andere Gebäude mit einem großen Anteil von gläsernen Fassadenteilen. Bei solchen Gebäuden werden die Räume im Inneren sehr wesentlich durch Sonneneinstrahlung beheizt. Ist die Sonneneinstrahlung sehr groß, so daß sich das Gebäudeinnere über das gewünschte Maß hinaus erwähnt, werden Fenster automatisch motorisch geöffnet. Darüber hinaus können Sonnenschutzeinrichtungen wie Storen motorisch betätigt werden. Die Steuer- und Regeleinrichtung muß aber auch auf andere klimatische Daten reagieren. So müssen offene Fenster, insbesondere, wenn sie im Dachbereich angeordnet sind, beispielsweise automatisch geschlossen werden, wenn es zu regnen beginnt. Auch auf starke Winde muß die Steuer- und Regeleinrichtung entsprechend reagieren.

Eine Steuer- und Regelvorrichtung der im Oberbegriff des Anspruchs 1 genannten Art ist aus der US-A-4,078,721 bekannt. Eine Vielzahl von Stellmotoren für Fenster wird je nach den Meßresultaten für Temperatur und Wind angesteuert, um die Fenster zu öffnen oder zu schließen. Obwohl durch besondere Maßnahmen das gleichzeitige Anlaufen aller Stellmotoren verhindert wird, um den Einschaltstromstoß zu vermindern, laufen alsbald nach dem Start alle Motoren gleichzeitig.

Aus der US-A-4,933,613 ist bekannt, zum Betrieb sehr großer Fenster mehrere parallel arbeitende Antriebe synchronisiert anzusteuern.

Der Erfindung liegt die Aufgabe zugrunde, eine Steuer- und Regeleinrichtung zu schaffen und ein Steuer- und Regelverfahren anzugeben, durch das verhindert wird, daß alle Motoren gleichzeitig laufen.

Die genannte Aufgabe wird erfindungsgemäß durch die Merkmale der Ansprüche 1 und 6 gelöst. Vorteilhafte Weiterbildungen ergeben sich aus den abhängigen Ansprüchen.

Insbesondere bei gewerblichen und industriellen Stromverbrauchern wird von vielen Stromversorgungsunternehmen ein Tarif berechnet, der sich nicht nur nach den verbrauchten Kilowattstunden richtet, sondern der ganz maßgeblich durch die bezogene Spitzenleitung oder durch die installierte Anschlußleistung bestimmt wird. Wenn nun beispielsweise bei einem Gewächshaus alle Fenster gleichzeitig betätigt werden, dann ergibt sich während des Laufs der Motoren kurzzeitig ein sehr hoher Strombedarf, also eine sehr große Maximalleistung. Durch die Erfindung wird erreicht, daß die einzelnen Motoren der verschiedenen Fenster nicht gleichzeitig, sondern immer nacheinander laufen. Die benötigte Maximalleistung entspricht damit der Nennleistung eines einzelnen Motors. Dies führt zu deutlich reduzierten Energiekosten.

Nachfolgend wird ein Ausführungsbeispiel der Erfindung anhand der Zeichnung näher erläutert.

Es zeigen:

Fig. 1 ein Schema der Steuer- und Regeleinrichtung,

Fig. 2 ein Steuerdiagramm,

Fig. 3 eine Schaltung eines Phasenwendeschalters,

Fig. 4 ein Anschlußschema eines Steuerglieds,

Fig. 5 und 6 Diagramme mit Signalverläufen und

Fig. 7a und 7b Diagramme von Regelgrößen und

Fig. 8 ein weiteres Steuerdiagramm.

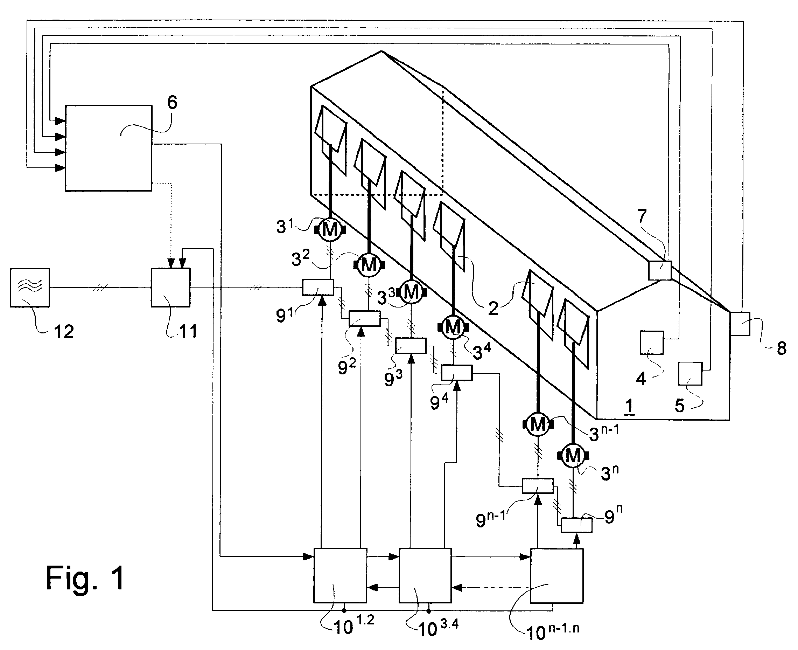

In der Fig. 1 bedeutet 1 ein Gebäude der eingangs beschriebenen Art, das an seiner Außenwand eine größere Zahl von Fenstern 2 aufweist, die mittels Motoren $3^1$, $3^2$... $3^n$ betätigbar sind. Die Motoren $3^1$, $3^2$... $3^n$ sind Drehstrommotoren, deren Drehrichtungsumkehr durch das Umschalten zweier Phasenleitungen erfolgt. Im Innenraum des Gebäudes 1 sind ein Temperaturfühler 4 und ein Feuchtefühler 5 angeordnet, deren Signale einem Regler 6 zugeleitet werden. Außerhalb des Gebäudes 1 sind ein Windfühler 7 und ein Regendetektor 8 angeordnet, deren Signale gleichfalls dem Regler 6 zugeleitet werden. Erfindungsgemäß ist jedem der Motoren $3^1$, $3^2$... $3^n$ ein Motorrelais 9 zugeordnet, dem Motor $3^1$ das Motorrelais $9^1$, dem Motor $3^2$ das Motorrelais $9^2$ und so fort.

Vorteilhaft werden immer zwei Motorrelais 9 von einem Steuerglied 10 betätigt, die beiden Motorrelais $9^1$ und $9^2$ also vom Steuerglied $10^{1.2}$, die beiden Motorrelais $9^3$ und $9^4$ vom Steuerglied $10^{3.4}$ und die Motorrelais $9^{n-1}$ und $9^n$ vom Steuerglied $10^{n-1.n}$. Die Steuerglieder 10 sind erfindungsgemäß kaskadenförmig hintereinander geschaltet. Während das erste Steuerglied $10^{1.2}$ unmittelbar vom Regler 6 angesteuert wird, wird das zweite Steuerglied $10^{3.4}$ vom ersten Steuerglied $10^{1.2}$ angesteuert und so fort. An sich wäre es möglich, jedem Motorrelais 9 ein separates Steuerglied 10 zuzuordnen, doch wird durch die zuvor beschriebene Zuordnung zweier Motorrelais 9 zu einem Steuerglied 10 erreicht, daß die Zahl der benötigten Steuerglieder 10 halbiert wird. Das hat sowohl hinsichtlich Kosten als auch hinsichtlich des Verdrahtungsaufwands Vorteile.

Vorteilhaft weist die Steuer- und Regelvorrichtung dann, wenn die Motoren 3 Drehstrommotoren sind, einen Phasenwendeschalter 11 auf, an den eingangsseitig eine dreiphasige Spannungsversorgung 12 angeschlossen ist und ausgangsseitig die Motorrelais $9^1$ bis $9^n$ angeschlossen sind. Die Verbindungsleitungen zwischen diesen Elementen sind dreipolig, ebenso die Verbindungsleitungen von den Motorrelais 9 zu den Motoren 3. Der Phasenwendeschalter 11 dient der gleichzeitigen Drehrichtungsumkehr für alle Motoren 3. Die Umschaltung der Drehrichtung der Motoren 3 erfolgt also zentral. Das hat den Vorteil, daß es unter keinen Umständen zu einem Kurzschluß zwischen zwei Phasen kommen kann, was beim Stand der Technik dann nicht auszuschließen ist, wenn die einzelnen Motoren 3 auch manuell ansteuerbar sind.

Der Regler 6 ist vorteilhaft ein digitaler Regler. Durch ein in seinem Mikroprozessor ablaufendes Programm wird bestimmt, in welcher Weise auf die Signale von

$$\delta_{mit} = \left(\frac{\delta_{max} - \delta_{min}}{2}\right) + \delta_{min}$$

Temperaturfühler 4, Feuchtefühler 5, Windfühler 7 und Regendetektor 8 reagiert werden soll. So ist er beispielsweise so programmiert, daß alle Fenster 2 geschlossen werden, wenn die Windgeschwindigkeit einen vorbestimmten Wert überschreitet. Er ist zudem so programmiert, daß alle Fenster 2 geschlossen werden, wenn der Regendetektor 8 feststellt, daß es regnet. Außerdem kann er so programmiert sein, daß die Fenster 2 geöffnet werden, wenn der Meßwert des Feuchtefühlers 5 einen vorbestimmten Wert überschreitet. Ein weiterer, besonders wichtiger Regelparameter ist die im Gebäude 1 gemessene Temperatur. In der Regel soll diese Temperatur auf einem bestimmten Wert oder in einem bestimmten Bereich gehalten werden. So ist der Regler 6 beispielsweise derart programmiert, daß er aus einem zulässigen minimalen Temperaturwert $\delta_{min}$ und einem zulässigen maximalen Temperaturwert $\delta_{max}$ den mittleren Temperaturwert $\delta_{mit}$ nach der folgenden Formel berechnet: Dieser mittlere Temperaturwert $\delta_{mit}$ bildet anschließend den Sollwert. Ein vom Temperaturfühler 4 ermittelter Temperatur-Istwert $\delta_{akt}$ wird mit diesem Sollwert verglichen. Ist der Temperatur-Istwert $\delta_{akt}$ größer als der mittlere Temperaturwert $\delta_{mit}$ und der Temperatur-Istwert $\delta_{akt}$ steigend, so gibt der Regler 6 einen Stellbefehl zum Öffnen der Fenster 2 aus. Ist der Temperatur-Istwert $\delta_{akt}$ kleiner als der mittlere Temperaturwert $\delta_{mit}$ und der Temperatur-Istwert $\delta_{akt}$ fallend, so gibt der Regler 6 einen Stellbefehl zum Schließen der Fenster 2 aus.

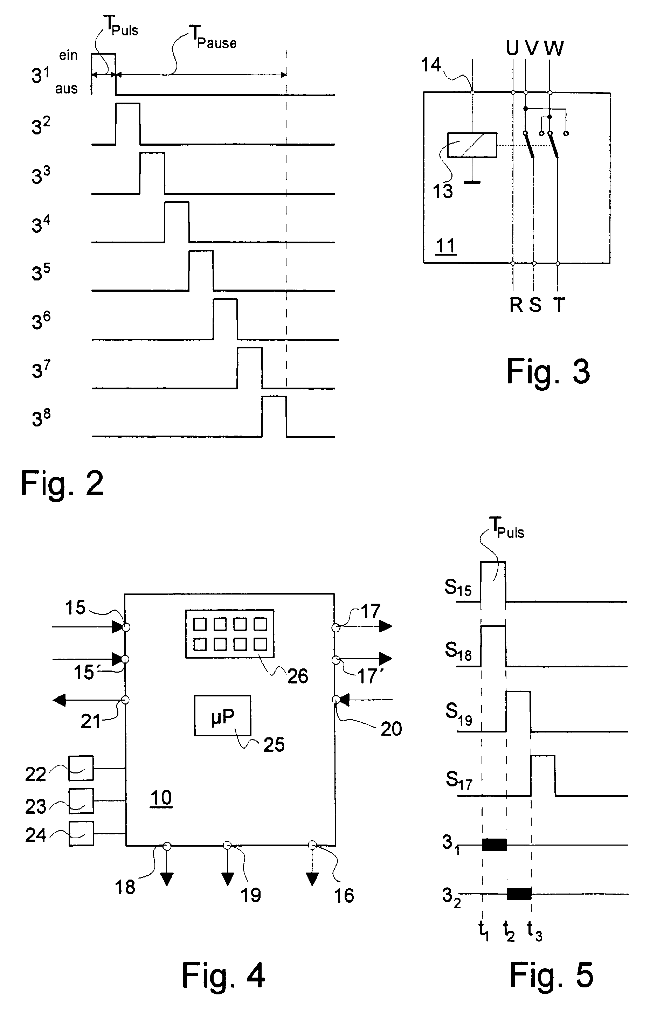

Erfindungsgemäß besteht der Stellbefehl darin, eine bestimmte Laufzeit für die Motoren 3 festzulegen. Dabei laufen die einzelnen Motoren 3 nicht gleichzeitig, sondern nacheinander. Wird beispielsweise ein Stellbefehl für eine Laufzeit von zehn Sekunden ausgegeben, so läuft zunächst der Motor $3^1$ zehn Sekunden lang, anschließend der Motor $3^2$ zehn Sekunden lang, danach der Motor $3^3$ zehn Sekunden lang und so weiter. Die Ausführung des Stellbefehls ist dann abgeschlossen, wenn der letzte Motor $3^n$ zehn Sekunden lang gelaufen ist. Dies ist in der Fig. 2 als Steuerdiagramm dargestellt. Untereinander sind dabei die Betriebszustände "ein" und "aus" für acht Motoren $3^1$ bis $3^8$ in ihrem zeitlichen Ablauf dargestellt. Durch einen Stellbefehl mit einer bestimmten Motor-Laufzeit $T_{Puls}$ wird zunächst der Motor $3^1$ für die Zeitdauer von $T_{Puls}$ eingeschaltet. Anschließend läuft der Motor $3^2$ ebenfalls für die Zeitdauer von $T_{Puls}$, danach der Motor $3^3$ und so fort. Die Gesamtlaufzeit aller Motoren 3 entspricht dem Produkt aus Anzahl der Motoren 3 und Zeitdauer $T_{Puls}$. Der erste Motor $3^1$ könnte erst dann wieder zu laufen beginnen, wenn der letzte der Motoren 3, hier also der Motor $3^8$, seinen Lauf beendet hat. Die Zeitdauer vom Ende des Laufs des Motors $3^1$ bis zum Ende des Laufs des Motors $3^8$ wird als Pausenzeit $T_{Pause}$ bezeichnet. Die Summe von $T_{Puls}$ und $T_{Pause}$ wird gemeinhin als Zykluszeit $T_{Zy}$ bezeichnet. Die Zykluszeit $T_{Zy}$ ist vorteilhaft im Regler 6 programmierbar. Deren Größe richtet sich nach den Gegebenheiten des Gebäudes 1, nämlich beispielsweise nach der Zahl der durch Motoren 3 zu betätigenden Fenster 2 und der Stellzeit der Motoren 3, die erforderlich ist, um ein Fenster 2 von der einen Endstellung, beispielsweise "voll geöffnet", in die andere Endstellung, beispielsweise "geschlossen", zu bringen. Die Zykluszeit $T_{Zy}$ wird vorteilhaft berechnet nach der Formel:

$$T_{Zy} = n * T_{Lauf},$$

wobei n die Zahl der Motoren 3, identisch mit der Zahl der Fenster 2, und $T_{Lauf}$ jene Zeit ist, die ein Motor 3 benötigt, um ein Fenster 2 von der einen Endstellung in die andere Endstellung zu bewegen.

Erreicht wird der nacheinander stattfindende Lauf der einzelnen Motoren 3 durch die Ansteuerung der Motorrelais $9^1$ bis $9^n$ (Fig. 1) durch die Steuerglieder $10^{1.2}$ bis $10^{n-1.n}$, was später noch im Detail beschrieben wird.

Durch diesen nacheinander stattfindenden Lauf der einzelnen Motoren 3 wird erreicht, daß immer nur einer der Motoren 3 läuft, so daß die maximale elektrische Antriebsleistung dem Nennwert der Leistung eines einzelnen Motors 3 entspricht. Beim vorerwähnten Beispiel mit acht Motoren 3 beträgt die Anschlußleistung also nur ein Achtel jenes Wertes, der dann auftreten würde, wenn - wie beim vorbekannten Stand der Technik möglich - alle Motoren 3 gleichzeitig laufen. Entsprechend sind die Kosten für die elektrische Energie bedeutend niedriger, wenn bei der Tarifierung die Spitzenleistung berücksichtigt wird.

Grundsätzlich hat die Größe des Stellbefehls einen Zusammenhang mit der Regelabweichung, also mit der Größe der Differenz zwischen dem mittleren Temperaturwert $\delta_{mit}$ und dem Temperatur-Istwert $\delta_{akt}$. Je größer die Regelabweichung, desto größer der Stellbefehl. Der Stellbefehl hat dabei grundsätzlich zwei Komponenten: Die Verstellrichtung, also Öffnen oder Schließen der Fenster 2, und die Stellgröße, also die Größe der Laufzeit für die Motoren 3.

Der Stellbefehl des Reglers 6 wird erfindungsgemäß zum ersten Steuerglied $10^{1.2}$ geleitet. Dabei bestehen verschiedene Möglichkeiten hinsichtlich der Behandlung der beiden Komponenten des Stellbefehls. Es ist, wie aus der Fig. 1 durch eine gestrichelte Linie erkennbar, möglich, die Komponente "Verstellrichtung" des Stellbefehls direkt zum Phasenwendeschalter 11 zu leiten, während die Komponente "Stellgröße", also das Ausmaß der Verstellung, zum ersten Steuerglied $10^{1.2}$ geleitet wird. Alternativ ist es möglich, beide Komponenten dem ersten Steuerglied $10^{1.2}$ zuzuführen und dann vom Steuerglied $10^{1.2}$ und den nachfolgenden Steuergliedern $10^{3.4}$, ..., $10^{n-1.n}$ den Phasenwendeschalter 11 anzusteuern. Warum das vorteilhaft ist, wird später noch beschrieben werden. Wesentlich ist, daß der Phasenwendeschalter 11 zuerst angesteuert wird, bevor einer der Motoren 3 betätigt wird. Damit wird sichergestellt, daß die Bewegung eines Motors 3 erst dann einsetzt, wenn die Bewegungsrichtung eindeutig festgelegt ist. Außerdem muß der Phasenwendeschalter 11 dann nicht unter Last schalten, was die Lebensdauer der Kontakte vorteilhaft verlängert.

Das Verhalten der Regelstrecke ist abhängig von den Eigenschaften des Gebäudes 1, beispielsweise von der Größe der verglasten Fläche, vom Gebäudevolumen und von der räumlichen Orientierung des Gebäudes. Es ist deshalb vorteilhaft, wenn der Regler 6 hinsichtlich verschiedener Parameter programmierbar ist. Für alle diese Parameter sind vorteilhaft Basiswerte, sogenannte Default-Werte, fest einprogrammiert.

In der Fig. 3 ist der Phasenwendeschalter 11 dargestellt, an den eingangsseitig die drei Phasen R, S und T der Drehstrom-Spannungsversorgung 12 (Fig. 1) angeschlossen sind. Ausgangsseitig weist der Phasenwendeschalter 11 drei Anschlüsse U, V und W auf, die über die Motorrelais 9 (Fig. 1) den Motoren 3 die zu deren Lauf benötigte Spannung zuführen. Der Phasenwendeschalter 11 enthält ein Relais 13, das durch ein an einem Steuereingang 14 anliegendes Signal angesteuert wird. Dieses Signal beinhaltet, wie zuvor schon erwähnt, die Information über die Bewegungsrichtung der Motoren 3, ob also die Motoren 3 die Fenster 2 in Öffnungs- oder in Schließrichtung betätigen sollen. Dabei kann dieses Signal entweder direkt vom Regler 6 stammen oder vorteilhaft von den Steuergliedern 10. Das Signal ist vorteilhaft ein 24-Volt-Signal. Vorteilhafterweise ist das Relais 13 ein monostabiles Relais.

Das dieses Relais 13 beeinflussende Signal ist dann vorteilhaft nur zweibegriffig: "Low" oder "High". Es ist "Low" entsprechend 0 Volt, wenn die Motoren 3 die Fenster 2 in Öffnungsrichtung betätigt werden sollen.

Das Signal ist "High" entsprechend 24 Volt, wenn die Motoren 3 die Fenster 2 in Schließrichtung betätigen sollen. Liegt am Steuereingang 14 "Low"-Signal an, dann hat das Relais 13 die in der Fig. 3 gezeigte Stellung. Das Relais 13 enthält zwei Umschaltkontakte. In der ersten Stellung, wie in Fig. 3 gezeigt, stellt der erste Kontakt in bekannter Weise die Verbindung zwischen den Phasen S und V her, während der zweite Kontakt die Verbindung der Phase T mit der Phase W herstellt. Diese Kontaktstellung liegt bei abgefallenem Relais 13 vor. Zieht das Relais 13, angesteuert durch ein "High"-Signal am Steuereingang 14, an, so verbindet der erste Kontakt die Phase S mit der Phase W, während der zweite Kontakt die Phase T mit der Phase V herstellt. Die beiden Phasen R und V sind unmittelbar miteinander verbunden. Durch die Phasenumschaltung werden die Motoren 3 von Rechts- auf Linkslauf umgeschaltet, entsprechend dem Lauf in Öffnungs-bzw. Schließrichtung der Fenster 2.

Enthält der Phasenwendeschalter 11 ein monostabiles Relais 13, dann hat das Relais 13 bei fehlender Ansteuerung die in der Fig. 3 gezeigte Stellung. Diese Stellung entspricht vorteilhaft dem Lauf der Motoren 3 in Öffnungsrichtung für die Fenster 2. Somit ist es gar nicht nötig, daß der Phasenwendeschalter 11 ein Steuersignal erhält, wenn die Fenster 2 in Öffnungsrichtung betätigt werden sollen. Eine Ansteuerung des Phasenwendeschalters 11 ist also nur erforderlich, wenn die Fenster 2 in Schließrichtung betätigt werden sollen.

Durch diese zentral gesteuerte Drehrichtungsumkehr wird sicher vermieden, daß einige Fenster 2 in Öffnungsrichtung betätigt werden, während andere Fenster 2 in Schließrichtung betätigt werden. Gegenüber den vorbekannten Lösungen hat dies zudem den Vorteil, daß außer diesem Relais 13 für jeden Motor 3 nur ein einziges Motorrelais 9 benötigt wird, während bei diesem vorbekannten Stand der Technik für jeden Motor 3 zwei Motorrelais, nämlich eines für Linkslauf und ein weiteres für Rechtslauf, nötig ist. Während bei n Motoren also beim Stand der Technik eine Zahl von 2n Relais nötig ist, reduziert sich durch diese vorteilhafte Ausgestaltung die Zahl der zur Steuerung der Motoren 3 nötigen Relais auf n+1.

In der Fig. 4 ist ein Anschlußschema eines Steuerglieds 10 dargestellt. Es weist mindestens einen Steuereingang 15 auf, aufden ein vom Regler 6 (Fig. 1) oder von einem vorgeschalteten weiteren Steuerglied 10 stammendes Stellsignal gelangt. Daneben kann ein zweiter Steuereingang 15' vorhanden sein. Ein einziger Steuereingang 15 wird dann vorgesehen, wenn das Stellsignal sowohl die Richtungsinformation als auch die Stellgröße beinhaltet. Es kann aber vorteilhaft sein, zwei Steuereingänge 15 und 15' vorzusehen. In diesem Fall wird vorteilhaft das Stellsignal nach Richtungsinformationen getrennt angeliefert. So kann es vorteilhaft sein, aufden ersten Steuereingang 15 nur jene Stellsignale zu leiten, die Fenster 2 in Öffnungsrichtung betätigen sollen, während auf den zweiten Steuereingang 15' nur jene Stellsignale geleitet werden, die Fenster 2 in Schließrichtung betätigen sollen. In einem solchen Fall ist es auch vorteilhaft, den Phasenwendeschalter 11 nicht direkt vom Regler 6 her anzusteuern, wie dies im Zusammenhang mit der Erläuterung der Fig. 1 schon erwähnt worden ist, sondern an jedem Steuerglied 10 einen Ausgang 16 vorzusehen, mit dessen Signal der Phasenwendeschalter 11 angesteuert wird.

Daneben weist jedes Steuerglied 10 mindestens einen Steuerausgang 17 auf, der mit dem Steuereingang 15 eines nachgeschalteten Steuerglieds 10 verbunden ist. Ist ein zweiter Steuereingang 15' vorhanden, dann weist jedes Steuerglied 10 auch einen zweiten Steuerausgang 17' auf, der mit dem Steuereingang 15' des nachgeschalteten Steuerglieds 10 verbunden ist. Dies gilt, wie zuvor beschrieben, wenn das Stellsignal nach Richtungsinformationen getrennt geliefert wird.

Das Steuerglied 10 weist zudem einen ersten Relais-Steuerausgang 18 und einen zweiten Relais-Steuerausgang 19 auf. Über den Relais-Steuerausgang 18 wird das erste der angeschlossenen Motorrelais 9 angesteuert, während über den Relais-Steuerausgang 19 das zweite angeschlossene Motorrelais 9 angesteuert wird.

Handelt es sich beim Steuerglied 10 um das erste Steuerglied $10^{1.2}$ (Fig. 1), dann bestehen also folgende Verbindungen: Der Steuereingang 15 und gegebenenfalls auch der Steuereingang 15' empfangen die Stellbefehle direkt vom Regler 6, sind also mit entsprechenden Ausgängen am Regler 6 verbunden. Der Steuerausgang 17 und gegebenenfalls auch der Steuerausgang 17' sind mit den Steuereingängen 15 bzw. 15' des nachgeschalteten Steuerglieds $10^{3.4}$ verbunden. Der Relais-Steuerausgang 18 führt zum Motorrelais $9^1$ und der Relais-Steuerausgang 19 zum Motorrelais $9^2$.

Handelt es sich hingegen beim Steuerglied 10 um das zweite Steuerglied $10^{3.4}$ (Fig. 1), dann bestehen entsprechend folgende Verbindungen: Der Steuereingang 15 und gegebenenfalls auch der Steuereingang 15' empfangen die Stellbefehle vom vorgeschalteten Steuerglied $10^{1.2}$, nämlich von dessen Steuerausgängen 17 bzw. 17'. Der Steuerausgang 17 und gegebenenfalls auch der Steuerausgang 17' sind mit den Steuereingängen 15 bzw. 15' des nachgeschalteten Steuerglieds 10, also einem nicht dargestellten Steuerglied $10^{5.6}$ oder, wie in der Fig. 1 dargestellt, dem Steuerglied$^{n-1.n}$, verbunden. Der Relais-Steuerausgang 18 führt zum Motorrelais $9^3$ und der Relais-Steuerausgang 19 zum Motorrelais $9^4$.

Beim jeweils letzten Steuerglied 10 einer solchen Kaskade aus Steuergliedern 10 ist der Steuerausgang 17 auf Masse gelegt.

Vorteilhaft sind die Steuerglieder 10 zusätzlich mit je einem Rückmeldeeingang 20 und einem Rückmeldeausgang 21 ausgestattet. Damit erhält jedes Steuerglied 10 vom nachgeschalteten Steuerglied 10 eine Information über den ordnungsgemäßen Ablauf der Abarbeitung der Befehle. Vom Rückmeldeausgang 20 des ersten Steuerglieds $10^{1.2}$ kann eine in der Fig. 1 nicht dargestellte Rückmeldeleitung zum Regler 6 vorhanden sein, über die dem Regler 6 gemeldet werden kann, daß die einzelnen Steuerglieder 10 korrekt arbeiten. Bei Fehlen dieses Rückmeldesignals kann der Regler 6 entsprechend einen Alarm generieren.

Der Vollständigkeit wegen wird noch erwähnt, daß an die Steuerglieder 10 jeweils auch Endschalter 22 und 23 der Fensterantriebe anschließbar sind, was aber hier nicht weiter ausgeführt wird, weil dies nicht erfindungswesentlich ist. Der eine Endschalter 22 detektiert dabei, daß das Fenster 2 voll geöffnet ist, während der andere Endschalter 23 den Zustand meldet, wenn das Fenster 2 gänzlich geschlossen ist. In gleicher Weise können auch elektromagnetische Schutzeinrichtungen 24 der Motoren 3 anschließbar sein.

Die einzelnen Steuerglieder 10 sind identisch aufgebaut. Sie enthalten einen Mikroprozessor 25, beispielsweise aus der Familie 80C51. Durch diesen Mikroprozessor 25 wird ein Programm abgearbeitet, das in einem Speicher abgelegt ist. Das Programm bzw. der durch das Programm gesteuerte funktionelle Ablauf wird später noch detaillierter beschrieben. Selbstverständlich sind auch passende Interfaces zu den Ein- und Ausgängen vorhanden. Daneben weist jedes Steuerglied 10 auch noch ein Bedienfeld 26. Durch Manipulation an diesem Bedienfeld 26 ist es beispielsweise möglich, die diesem Steuerglied 10 zugeordneten Fenster 2 separat zu bedienen, also entgegen den Stellbefehlen vom Regler 6 zu öffnen oder zu schließen.

In der Fig. 5 ist ein Signalverlauf für ein solches Steuerglied 10 dargestellt. Mit $S_{15}$ ist der Signalverlauf am Steuereingang 15 dargestellt. Das Signal besteht aus einem Puls der schon erwähnten Motor-Laufzeit $T_{Puls}$ (Fig. 2). Erscheint ein solcher Puls am Steuereingang 15, so soll der von diesem Steuerglied 10 angesteuerte erste Motor 3, im Falle des Steuerglieds $10^{1.2}$ also der Motor $3^1$, für die Zeitdauer von $T_{Puls}$ beispielsweise in Öffnungsrichtung, laufen. Erscheint der Puls am Steuereingang 15', so soll der Motor $3^1$ für die Zeitdauer von $T_{Puls}$ in Schließrichtung laufen. Der erste Motor $3^1$ läuft also entsprechend vom Zeitpunkt $t_1$ bis zum Zeitpunkt $t_2$. Dies wird dadurch erreicht, daß das Steuerglied 10 am Relais-Steuerausgang 18 einen entsprechenden, in der Fig. 5 mit $S_{18}$ bezeichneten Signalverlauf liefert, mit dem das zugehörige Motorrelais $9^1$ angesteuert wird.

Im Moment $t_2$, wenn der erste Motor $3^1$ nicht mehr angesteuert wird, erscheint für die Zeitdauer von $T_{Puls}$ ein entsprechendes Signal am zweiten Relais-Steuerausgang 19, wobei der Signalverlauf mit $S_{19}$ bezeichnet ist.. Mit diesem Signal wird das zugehörige zweite Motorrelais $9^2$ angesteuert, so daß für die Zeitdauer von $T_{Puls}$ der zweite Motor $3^2$ läuft. Zum Zeitpunkt $t_3$ ist der Lauf des zweiten Motors $3^2$ beendet.

Nun erscheint am Steuerausgang 17 das mit $S_{17}$ bezeichnete Signal, das nun in gleicher Weise den Ablauf im nachgeordneten Steuerglied 10 beeinflußt.

Die Darstellung in der Fig. 5 ist insofern idealisiert, als die Signalverläufe $S_{15}$, $S_{18}$, $S_{19}$ und $S_{17}$ nur schematisch dargestellt sind. Die Abarbeitung der Befehle durch den Mikroprozessor des Steuerglieds 10 benötigt natürlich etwas Zeit. Der durch die Befehlsabarbeitung entstehende Zeitverzug liegt aber, abhängig von der Taktfrequenz und von der Anzahl der Befehlsschritte, im Bereich von Mikro- oder Millisekunden, während die Zeitdauer von $T_{Puls}$ einige bis viele Sekunden beträgt. Auf jeden Fall ist durch die sequentielle Abarbeitung sichergestellt, daß sich die Laufzeiten der Motoren $3^1$ und $3^2$ nicht überlappen können.

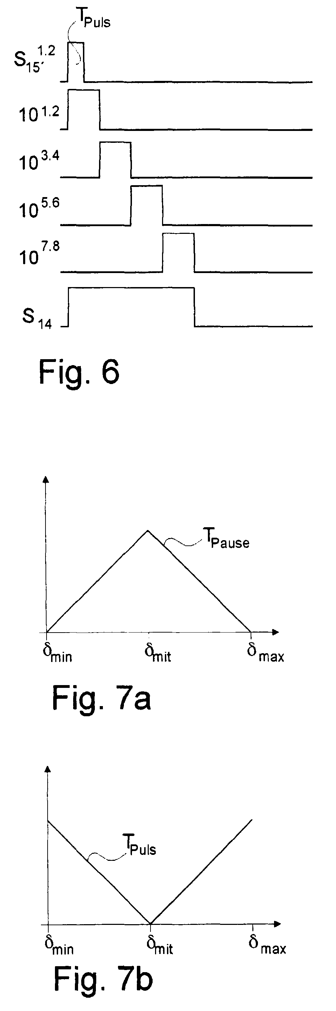

In der Fig. 6 ist ein Signaldiagramm für die Ansteuerung des Phasenwendeschalters 11 gezeigt. Der oberste Signalverlauf zeigt den Verlauf des am Steuereingang 15' (Fig. 4) des ersten Steuerglieds $10^{1.2}$ anliegenden Signals, das vom Regler 6 (Fig. 1) stammt. Es ist, wie schon erwähnt, gekennzeichnet durch seine Signaldauer $T_{Puls}$. Da es am Steuereingang 15' anliegt, ist es, wie schon erwähnt, ein Signal zum Schließen der Fenster 2. Da beim Schließen der Fenster 2 die Drehrichtung der Motoren 3 umgekehrt werden muß, muß der Phasenwendeschalter 11 angesteuert werden. Am Ausgang 16 des ersten Steuerglieds $10^{1.2}$ erscheint deshalb ein in der darunter folgenden Kurve gezeigtes Signal. Die Signaldauer ist aus dem Signal $T^{Puls}$ abgeleitet und entspricht der Summe der Laufzeiten der vom ersten Steuerglied $10^{1.2}$ angesteuerten Motoren $3^1$ und $3^2$. Entsprechend folgt anschließend, wenn das zweite Steuerglied $10^{3.4}$ durch das erste Steuerglied $10^{1.2}$ angesteuert wird, wie das schon beschrieben wurde, am Ausgang 16 des zweiten Steuerglieds $10^{3.4}$ ein in der dritten Kurve gezeigtes Signal. Entsprechendes gilt für die anschließend angesteuerten Steuerglieder $10^{5.6}$ und $10^{7.8}$. Die Ausgänge 16 jedes der Steuerglieder 10 führen also für eine gewisse Zeit, die dem doppelten Wert von $T_{Puls}$ entspricht, "High"-Signal. Da die Ausgänge 16 aller Steuerglieder 10 miteinander und mit dem Eingang 14 des Phasenwendeschalters 11 verbunden sind, ergibt sich für das Signal am Eingang 14 des Phasenwendeschalters 11 automatisch eine ODER-Verknüpfung der einzelnen Ausgänge 16 der Steuerglieder 10. Die Ansteuerung des Phasenwendeschalters 11 gemäß dem untersten Kurvenzug erfolgt also so lange, als eines der Steuerglieder 10 einen der Motoren 3 ansteuert.

Hier zeigt sich auch der Vorteil gegenüber der zuvor angesprochenen Möglichkeit, den Phasenwendeschalter 11 direkt vom Regler 6 anzusteuern. Wird an einem Bedienfeld 26 eines Steuerglieds 10 ein manueller Befehl zum Schließen der Fenster ausgelöst, so wird der Phasenwendeschalter 11 direkt dadurch betätigt, daß am Ausgang 16 jenes Steuerglieds 10, an dem die Manipulation vorgenommen wird, das "High"-Signal erscheint. Da sich dieses Signal unmittelbar auf den Eingang 14 des Phasenwendeschalters 11 auswirkt, wird der Phasenwendeschalter 11 aktiviert. Käme das Steuersignal für den Phasenwendeschalter 11 vom Regler 6, wäre diese einfache Art der Handsteuerung nicht möglich.

Das hat außerdem noch einen weiteren Vorteil: Es wird angenommen, daß der Regler 6 zuletzt einen Befehl zum Öffnen der Fenster 2 ausgegeben hat und sich dieser Befehl noch in der Abarbeitung durch die einzelnen Steuerglieder 10 befindet. Stellt nun eine Person, die im Gebäude 1 tätig ist, fest, daß es gerade zu regnen beginnt oder daß ein Sturm aufkommt, so kann sie am nächstgelegenen Steuerglied 10 manuell in der Weise eingreifen, daß sie einen Befehl zum Schließen der Fenster 2 gibt. Da die durch den Phasenwendeschalter 11 bewirkte Drehrichtungsumkehr der Motoren 3 gleichzeitig auf alle Motoren 3 wirkt, wird durch diesen manuellen Eingriff erreicht, daß der vom Regler 6 ausgegebene Befehl zum Öffnen der Fenster 2 nicht weiter ausgeführt wird, sondern daß jene Fenster 2, deren Motoren 3 von den einzelnen Steuergliedern 10 gerade angesteuert werden, sofort in Schließrichtung betätigt werden.

Das erfindungsgemäße Verfahren zum Steuern und Regeln des im Inneren eines Gebäudes herrschenden Raumklimas besteht im Wesentlichen aus den nachfolgend genannten Verfahrensschritten. Zuerst vergleicht der Regler 6 die Sollwerte des Raumklimas mit den entsprechenden Istwerten. In erster Linie sind darunter die Werte für die Temperatur im Inneren des Gebäudes zu verstehen. Zusätzlich kann aber auch die Luftfeuchtigkeit Berücksichtigung finden. Der Regler 6 generiert aus der ermittelten Regelabweichung einen Stellbefehl für die Motoren 3, der die Fenster betätigt. Der Stellbefehl wird aber nicht direkt den Motoren 3 zugeführt, sondern er wird dem ersten Steuerglied 10 zugeleitet. Dieses Steuerglied 10 steuert in der Folge sowohl den Phasenwendeschalter 11 als auch die an das Steuerglied 10 angeschlossenen Motorrelais 9 an. Je nach Stellung des Phasenwendeschalters 11 läuft in der Folge der vom Motorrelais 9 angesteuerte Motor 3 in der einen oder der anderen Richtung, also in Öffnungs- oder Schließrichtung. Die zeitliche Dauer des Laufs des Motors 3 wird dabei bestimmt durch die zeitliche Länge des Stellbefehls.

Sind an ein Steuerglied 10 zwei Motoren 3 mit ihren Motorrelais 9 angeschlossen, wie aus der Fig. 1 erkennbar beispielsweise an das Steuerglied $10^{1.2}$ die Motoren $3^1$ und $3^2$ mit den zugehörigen Motorrelais $9^1$ und $9^2$, so wird zuerst das erste Motorrelais $9^1$ angesteuert, durch dessen Aktivierung der erste Motor $3^1$ läuft und zwar für die Dauer einer Zeitspanne, die der Länge des Stellbefehls entspricht. Sobald der erste Motor $3^1$ seinen Lauf beendet hat, wird, gesteuert vom Steuerglied $10^{1.2}$, das zweite Motorrelais $9^2$ angesteuert und damit der zweite Motor $3^2$ in Betrieb gesetzt. Wiederum entspricht die Einschaltdauer des zweiten

Motors $3^2$ der Länge des Stellbefehls. Es ist erfindungswesentlich, daß auch dann, wenn zwei Motoren 3 an ein Steuerglied 10 angeschlossen sind, diese beiden Motoren 3 nicht gleichzeitig laufen, sondern nacheinander.

Solange das Steuerglied 10 einen der Motoren 3 ansteuert, so lange wird auch ein Befehl für den Phasenwendeschalter 11 ausgegeben. Vorteilhaft ist dabei, wenn der Beginn der Ansteuerung des Phasenwendeschalters 11 zeitlich geringfügig vor dem Beginn der Ansteuerung eines der Motoren 3 liegt und wenn das Ende der Ansteuerung des Phasenwendeschalters 11 zeitlich auch geringfügig über das Ende der Ansteuerung eines der Motoren 3 hinausgeht. Damit wird erreicht, daß die Kontakte des Phasenwendeschalters 11, die den Strom für die Motoren 3 zu schalten haben, geschont werden, weil die Umschaltung dieser Kontakte immer im stromlosen Zustand erfolgt.

Die Verwirklichung der genannten zeitlichen Verzögerung durch programmtechnische Mittel im Steuerglied 10 ist auf verschiedene Weise möglich. Beispielsweise können Zeitgeber gestartet und gestoppt werden, die den entsprechenden zeitlichen Ablauf, also das verzögerte Einschalten eines Motors 3 und das geringfügig verlängerte Halten des Zustands des Phasenwendeschalters 11, steuern.

Erfindungsgemäß werden dem ersten Steuerglied $10^{1.2}$ nachgeschaltete Steuerglieder 10 immer erst dann mit dem Stellbefehl angesteuert, wenn das erste Steuerglied $10^{1.2}$ die Ansteuerung der von diesem Steuerglied $10^{1.2}$ beeinflußten Motoren $3^1$ und $3^2$ beendet hat. Das gilt dann auch für alle weiteren nachgeschalteten Steuerglieder 10. Ein nachgeschaltetes Steuerglied 10 erhält den Stellbefehl vom vorgeschalteten Steuerglied 10 immer erst dann, wenn das vorgeschaltete Steuerglied 10 die Ansteuerung der von ihm beeinflußten Motoren 3 beendet hat. Damit ist erfindungsgemäß sichergestellt, daß zu jedem beliebigen Zeitpunkt immer nur einer der Motoren 3 laufen kann.

Es ist wie erwähnt auch charakteristisch für die Erfindung, daß der Stellbefehl bestimmt ist durch seine zeitliche Dauer. Die Dauer des Laufs eines Motors 3 korreliert mit der zeitlichen Dauer des Stellbefehls; Je länger der Stellbefehl andauert, desto länger läuft jeder der Motoren 3. Vorteilhaft ist die Drehrichtung für die Motoren 3 eindeutig vorgegeben durch die Stellung des Polwendeschalters 11.

Die Dauer des Stellbefehls wird durch den Regler 6 generiert. Wie schon erwähnt, ist der Stellbefehl abhängig von der Größe der Regelabweichung. Bei der Generierung spielen aber auch die charakteristischen Daten der Anlage eine Rolle, nämlich die Zahl der von Motoren 3 angetriebenen Fenster 2 und die Laufzeit, die ein Motor 3 benötigt, um von der einen Endstellung des Fensters 2 in die andere Endstellung des Fensters 2 zu gelangen. Diese Daten sind in den Regler 6 eingebbar. Bei einem bestimmten Gewächshaus sind beispielsweise acht von Motoren 3 angetriebene Fenster 2 vorhanden. Jeder Motor 3 benötigt beispielsweise dreißig Sekunden, um von der einen Endstellung des Fensters 2 in die andere Endstellung des Fensters 2 zu laufen. Daraus ergibt sich, daß dann, wenn die Fenster 2 von der einen Endstellung "voll offen" in die andere Endstellung "geschlossen" laufen sollen, ein gesamter Zeitbedarf von 8 * 30 = 240 Sekunden für die Ausführung des Befehls nötig ist. Im Hinblick auf die Trägheit der Regelstrecke ist diese an sich große Stellzeit völlig problemlos. So hat sich beispielsweise gezeigt, daß bei leicht bewölktem Himmel mit gelegentlichen Wechseln von Sonnenschein und fehlendem Sonnenschein, ein meßbarer Anstieg der Temperatur im Gewächshaus erst einige Minuten nach dem Beginn einer Periode mit Sonnenschein zu beobachten ist. Es entsteht wegen der Trägheit der Regelstrecke also durch die Verwirklichung der Erfindung kein Nachteil.

Aus der Trägheit der Regelstrecke ergibt sich auch, daß nicht jede minimale Veränderung der Temperatur im Gewächshaus sofort zu einem dann sehr Meinen Stellbefehl führen muß. Es ist deshalb auch vorteilhaft, bestimmte Basiswerte im Regler 6 zu programmieren. So ist es beispielsweise vorteilhaft, eine bestimmte minimale Motor-Laufzeit $T_{PulsMin}$ vorzugeben, die beispielsweise drei Sekunden betragen kann. Entsprechend kann es vorteilhaft sein, eine bestimmte minimale Pausenzeit $T_{PauseMin}$ vorzugeben, die bei einem Gebäude mit den zuvor genannten Daten für die Zahl der Fenster und die Laufzeit der Motoren 3 von der einen Endstellung in die andere Endstellung beispielsweise 240 Sekunden betragen kann.

Der Regler 6 generiert unter Berücksichtigung dieser Daten und der aktuellen Regelabweichung der Temperatur im Inneren des Gewächshauses den Stellbefehl. Der Stellbefehl an sich entspricht der Motor-Laufzeit $T_{Puls}$. Hinsichtlich der Wirkung des Stellbefehls ist aber nicht die Motor-Laufzeit $T_{Puls}$ allein maßgebend, sondern das Verhältnis von Motor-Laufzeit $T_{Puls}$ zu Pausenzeit $T_{Pause}$. Damit bestehen auch verschiedene Möglichkeiten der Ausgestaltung. So ist es beispielsweise möglich, die Pausenzeit $T_{Pause}$ konstant zu lassen und die Motor-Laufzeit $T_{Puls}$ aufgrund der Regelabweichung zu variieren. Andererseits ist es möglich, die Motor-Laufzeit $T_{Puls}$ konstant zu lassen und die Pausenzeit $T_{Pause}$ zu variieren. Die Fig. 7a zeigt im Sinne eines Beispiels die Variation der Pausenzeit $T_{Pause}$ als Funktion der Regelabweichung, die Fig. 7b als alternative Lösung die Variation der Motor-Laufzeit $T_{Puls}$ als Funktion der Regelabweichung. In beiden Figuren ist auf der Abszissenachse der Temperatur-Istwert $\delta_{akt}$ dargestellt und als Bezugspunkte sind die Werte für den zulässigen minimalen Temperaturwert $\delta_{min}$, den zulässigen maximalen Temperaturwert $\delta_{max}$ und den mittleren Temperaturwert $\delta_{mit}$ markiert.

In der Fig. 7a ist ersichtlich, daß die Pausenzeit $T_{Pause}$ ein Maximum erreicht, wenn der Temperatur-Istwert $\delta_{akt}$ dem mittleren Temperaturwert $\delta_{mit}$ entspricht und daß sie beidseits sinkt, je mehr der Temperatur-Istwert $\delta_{akt}$ vom mittleren Temperaturwert $\delta_{mit}$ verschieden

ist. Die Pausenzeit $T_{Pause}$ ist Null, wenn der Temperatur-Istwert $\delta_{akt}$ gleich dem zulässigen maximalen Temperaturwert $\delta_{max}$ oder dem zulässigen minimalen Temperaturwert $\delta_{min}$ ist. Ist der Temperatur-Istwert $\delta_{akt}$ größer als der mittlere Temperaturwert $\delta_{mit}$, so gehören die entsprechenden Pausenzeiten $T_{Pause}$ zu den Stellbefehlen in Öffnungsrichtung für die Fenster 2. Ist der Temperatur-Istwert $\delta_{akt}$ dagegen Meiner als der mittlere Temperaturwert $\delta_{mit}$, so gehören die entsprechenden Pausenzeiten $T_{Pause}$ zu den Stellbefehlen in Schließrichtung für die Fenster 2.

In analoger Weise ist aus der Fig. 7b ersichtlich, wie die Motor-Laufzeit $T_{Puls}$ variiert wird. Die Motor-Laufzeit $T_{Puls}$ ist Null, wenn der Temperatur-Istwert $\delta_{akt}$ dem mittleren Temperaturwert $\delta_{mit}$ entspricht. Sie steigt an, je mehr der Temperatur-Istwert $\delta_{akt}$ vom mittleren Temperaturwert $\delta_{mit}$ verschieden ist. Die Motor-Laufzeit $T_{Puls}$ erreicht ihr Maximum, wenn der Temperatur-Istwert $\delta_{akt}$ gleich dem zulässigen maximalen Temperaturwert $\delta_{max}$ oder dem zulässigen minimalen Temperaturwert $\delta_{min}$ ist. Auch hier gilt, daß es sich um Stellbefehle in Öffnungsrichtung für die Fenster 2 handelt, wenn der Temperatur-Istwert $\delta_{akt}$ größer ist als der mittlere Temperaturwert $\delta_{mit}$. Ist der Temperatur-Istwert $\delta_{akt}$ dagegen kleiner als der mittlere Temperaturwert $\delta_{mit}$, so gehören die entsprechenden Motor-Laufzeiten $T_{Puls}$ zu den Stellbefehlen in Schließrichtung für die Fenster 2.

Der Regler 6 berechnet beispielsweise das Verhältnis von Motor-Laufzeit $T_{Puls}$ zu Pausenzeit $T_{Pause}$ nach den folgenden Formeln.

Wenn der Temperatur-Istwert $\delta_{akt}$ größer ist als der mittlere Temperaturwert $\delta_{mit}$, so wird ein Befehl zum Öffnen der Fenster 2 generiert, für den das Verhältnis von Motor-Laufzeit $T_{Puls}$ zu Pausenzeit $T_{Pause}$ nach der Formel

$$\frac{T_{Pause}}{T_{Puls}} = \frac{\frac{T_{PauseDef}}{T_{PulsDef}}}{\delta_{max} - \delta_{mit}} * (\delta_{max} - \delta_{akt})$$

berechnet wird. Darin bezeichnet $T_{PauseDef}$ einen schon erwähnten Basiswert für die im Regler 6 programmierte Pausenzeit $T_{Pause}$ und $T_{PulsDef}$ einen ebenfalls schon erwähnten Basiswert für die im Regler 6 programmierte Motor-Laufzeit $T_{Puls}$. Die übrigen in der Formel verwendeten Zeichen wurden zuvor schon definiert.

Wenn der Temperatur-Istwert $\delta_{akt}$ kleiner ist als der mittlere Temperaturwert $\delta_{mit}$, so wird ein Befehl zum Schließen der Fenster 2 generiert, für den das Verhältnis von Motor-Laufzeit $T_{Puls}$ zu Pausenzeit $T_{Pause}$ nach der Formel

$$\frac{T_{Pause}}{T_{Puls}} = \frac{\frac{T_{PauseDef}}{T_{PulsDef}}}{\delta_{mit} - \delta_{min}} * (\delta_{akt} - \delta_{min})$$

berechnet wird.

Es spielt dann, wie zuvor schon erwähnt, im Rahmen der Erfindung keine Rolle, ob die Motor-Laufzeit $T_{Puls}$ oder die Pausenzeit $T_{Pause}$ konstant gehalten und der jeweils andere Wert entsprechend dem berechneten Verhältnis von Motor-Laufzeit $T_{Puls}$ zu Pausenzeit $T_{Pause}$ korrigiert wird.

Wegen der schon erwähnten Trägheit des Regelkreises spielen in der Regel die durchaus beträchtlichen Laufzeiten der Motoren 3 keine Rolle. Wird beispielsweise vom Regler 6 eine Motor-Laufzeit $T_{Puls}$ von 20 Sekunden berechnet und an das erste Steuerglied übertragen und sind im Gebäude 1 zehn Fenster 2 vorhanden, deren Motoren 3 in der Folge nacheinander je 20 Sekunden laufen, so ist die Ausführung des Befehls erst nach 10 * 20 = 200 Sekunden abgeschlossen. Dies ist vom Verhalten der Regelstrecke aus betrachtet durchaus akzeptabel.

Es gibt jedoch durchaus auch Fälle, bei denen ein solches Verhalten nicht völlig den Erfordernissen entspricht. Wenn man davon ausgeht, daß alle Fenster 2 voll geöffnet sind und anschließend wegen eines einsetzenden Gewittersturms geschlossen werden sollen, wenn man weiter wie oben davon ausgeht, daß 10 Fenster 2 vorhanden sind, wobei für jedes Fenster 2 dreißig Sekunden benötigt werden, um es durch dessen Motor 3 völlig zu schließen, dann ist die Ausführung des Befehls mit einem Zeitaufwand von 10 * 30 Sekunden, also 5 Minuten, verbunden. Es ist deshalb vorteilhaft, die Abarbeitung von Befehlen mit einer Motor-Laufzeit $T_{Puls}$, die größer ist als ein bestimmter Grenzwert, wie nachfolgend beschrieben zu modifizieren. Als Anhaltswert für einen solchen Grenzwert können beispielsweise zehn oder fünfzehn Sekunden betrachtet werden.

Geht man vom vorgenannten Fall aus, daß alle Fenster 2 wegen eines einsetzenden Gewittersturms, der vom Windfühler 7 (Fig. 1) und vom Regendetektor 8 (Fig. 1) an den Regler 6 gemeldet wird, vom voll geöffneten Zustand durch eine Motor-Laufzeit $T_{Puls}$ von 30 Sekunden in den geschlossenen Zustand bewegt werden sollen, dann ist es vorteilhaft, die Fenster 2 nacheinander zunächst durch eine erste Motor-Laufzeit $T_{PulsTeil}$ von beispielsweise 15 Sekunden eine mittlere Stellung zu bringen und anschließend durch eine zweite Motor-Laufzeit $T_{PulsTeil}$ von wiederum 15 Sekunden von der mittleren Stellung in die geschlossene Stellung zu bringen. Man kann auf diese Weise erreichen, daß nach der Hälfte der an sich benötigten totalen Stellzeit alle Fenster 2 bereits in einer mittleren Stellung sind, in der die Gefahr durch Wind und Regen für Objekte im Innenraum des Gebäudes schon deutlich vermindert ist.

Für die vorgenannte Teilung einer langen Motor-Laufzeit $T_{Puls}$ in zwei oder mehr kürzere Teil-Laufzeiten $T_{PulsTeil}$ spielt es keine Rolle, ob diese Aufteilung vom Regler 6 oder innerhalb eines Steuerglieds 10 vorgenommen wird. Da die Steuerglieder 10 selbst einen Mikroprozessor 25 aufweisen, kann diese Modifikation des Steuerverfahrens innerhalb der Steuerglieder 10 erfolgen, so daß der Ablauf im Regler 6 davon unberührt bleibt.

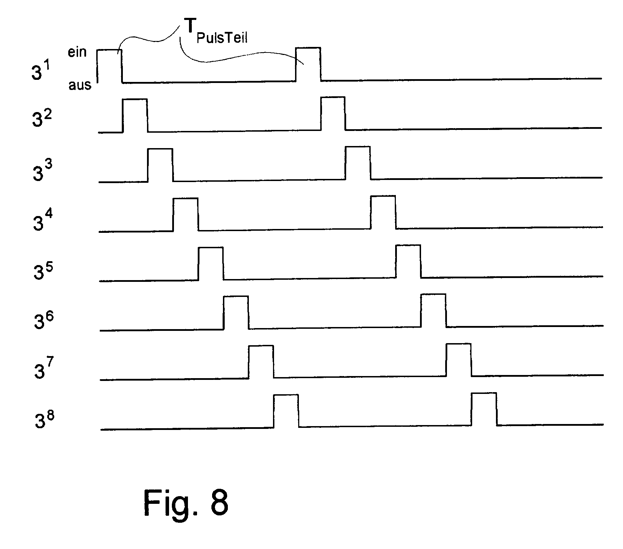

In der Fig. 8 ist das vorstehend beschriebene Steuerverhalten dargestellt. Das Beispiel der Fig. 8 bezieht sich auf Gebäude 1 mit acht Fenstern 2, die von acht Motoren $3^1$ bis $3^8$ betätigt werden. Alle Motoren $3^1$ bis $3^8$ laufen zunächst nacheinander während einer Teil-Laufzeit $T_{PulsTeil}$. Hat der Motor $3^8$ den Lauf beendet, beginnt wieder der Motor $3^1$ mit der Teil-Laufzeit $T_{PulsTeil}$ zu laufen und anschließend nacheinander die Motoren $3^2$ bis $3^8$.

Der Regler 6 kann vorteilhaft auch dann eine Bewegung der Fenster 2 auslösen, wenn der Feuchtefühler 5 einen Wert meldet, der von einem im Regler 6 programmierten Sollbereich abweicht. Ist beispielsweise die Feuchtigkeit im Gebäude 1 zu hoch, so kann vorteilhaft eine Steuerung der Fenster 2 in Öffnungsrichtung erfolgen. Damit ist ein Austausch der feuchten Luft im Inneren des Gebäudes 1 gegen aus der Umgebung stammende Frischluft möglich. Ist die Temperatur im Inneren des Gebäudes 1 höher als in der Umgebung, so wird anschließen die einströmende Frischluft aufgewärmt, wodurch die relative Luftfeuchtigkeit sinkt. Der Regler 6 kann vorteilhaft auch einen Ventilator ansteuern, mit dessen Hilfe der Luftaustausch forciert wird.

Eingangs wurde erwähnt, daß bei Gebäuden 1 mit sehr großen Fassadenflächen aus Glas auch die Möglichkeit besteht, Sonnenschutzeinrichtungen wie Storen zu betätigen. Bei der Ansteuerung der solche Storen betätigenden Motoren kann die Erfindung in gleicher Weise genutzt werden.

Es wurde schon erwähnt, daß an die Steuerglieder 10 auch Endschalter 22, 23 anschließbar sind. Dies ist vorteilhaft, um dem Regler 6 mitzuteilen, ob die Fenster 2 sich in einer der Endlagen befinden. So kann beispielsweise erreicht werden, daß der Regler 6 dann keinen Befehl zum Öffnen der Fenster 2 ausgibt, wenn die Fenster 2 bereits völlig geöffnet sind.

Darüber hinaus kann es vorteilhaft sein, daß der Regler 6 intern alle ausgegebenen Stellbefehle aufsummiert. Wenn beispielsweise der Regler 6 im Anschluß an einen Befehl zum vollständigen Schließen der Fenster 2 die Fenster 2 nacheinander so ansteuert, daß deren Motoren 3 zunächst zehn Sekunden in Öffnungsrichtung laufen, danach nochmals acht Sekunden in Öffnungsrichtung und anschließend fünf Sekunden in Schließrichtung, so ist der Regler 6 durch eine interne Summation der Befehle darüber im Bild, daß die Fenster 2 nun in einer Position sind, die dreizehn Sekunden von der Stellung "geschlossen" entfernt ist.

Um den internen Summationsspeicher mit dem tatsächlichen Öffnungszustand der Fenster 2 in Übereinstimmung zu bringen, ist es vorteilhaft, die Fenster 2 periodisch durch einen Stellbefehl, der länger andauert als der Lauf von einer Endstellung in die andere, in eine der Endstellungen zu bringen und dann den internen Summationsspeicher auf diesen Wert der Endstellung zu setzen.

Da der Regler 6 und die Steuerglieder 10 digital arbeitende Einrichtungen sind und die einzelnen Elemente der Steuer- und Regelvorrichtung mit Kabeln von beträchtlicher Länge verbunden sind, besteht die Gefahr, daß Störsignale auftreten. Deshalb ist es vorteilhaft, Regler 6 und Steuerglieder 10 so auszugestalten, daß übermittelte Stellbefehle von den Steuergliedern 10 nur dann als gültige Befehle erkannt und ausgeführt werden, wenn die Dauer eines Stellbefehls größer ist als der Wert einer Störwartezeit. Diese Störwartezeit kann beispielsweise 5 Millisekunden betragen.

**Patentansprüche**

1. Steuer- und Regelvorrichtung für ein Gebäude mit einem großen Anteil von gläsernen Fassadenteilen, durch die die innerhalb des Gebäudes herrschenden Temperaturverhältnisse sehr wesentlich von den klimatischen Bedingungen wie Sonneneinstrahlung abhängig sind, beispielsweise ein Gewächshaus, mit einem das Raumklima im Gebäude beeinflussenden Regler, der Stellmotoren für Fenster des Gebäudes betätigt und der durch Sensoren zur Erfassung des Raumklimas im Inneren des Gebäudes und zur Erfassung klimatischer Daten in der Umgebung des Gebäudes beeinflußt wird, dadurch gekennzeichnet,

   - daß dem Regler (6) ein erstes Steuerglied (10) zum Steuern mindestens eines ersten Motors (3) nachgeschaltet ist, dem mindestens ein weiteres Steuerglied (10) zum Steuern mindestens eines weiteren Motors (3) nachgeschaltet ist,
   - wobei ein nachgeschaltetes weiteres Steuerglied (10) erst dann angesteuert wird, wenn das vorgeschaltete Steuerglied (10) die Ansteuerung des ihm zugeordneten Motors (3) beendet hat.

2. Steuer- und Regelvorrichtung nach Anspruch 1, dadurch gekennzeichnet, daß

   - daß jedes der Steuerglieder (10) auf mindestens ein Motorrelais (9) wirkt,
   - daß die Motoren (3) Drehstrommotoren sind,
   - daß jedes der Steuerglieder (10) auf einen die Drehrichtung aller Motoren (3) bestimmenden Phasenwendeschalter (11) einwirkt und
   - daß den Motoren (3) über je ein Motorrelais (9) die vom Phasenwendeschalter (11) in ihrer Phasenfolge beeinflußte Versorgungsspannung zugeführt ist.

3. Steuer- und Regelvorrichtung nach Anspruch 2, dadurch gekennzeichnet, daß jedem Steuerglied

($10^{1.2}$, $10^{3.4}$; $10^{n-1.n}$) zwei Motorrelais ($9^1$, $9^2$; $9^3$, $9^4$; $9^{n-1}$,$9^n$) zugeordnet sind, die vom Steuerglied (10) nacheinander ansteuerbar sind.

4. Steuer- und Regelvorrichtung nach Anspruch 3, dadurch gekennzeichnet, daß der Ausgang des Phasenwendeschalters (11) mit allen Motorrelais ($9^1$, $9^2$; $9^3$, $9^4$; $9^{n-1}$, $9^n$) verbunden ist, so daß alle Motorrelais ($9^1$, $9^2$; $9^3$, $9^4$; $9^{n-1}$, $9^n$) die Betriebsspannung für alle Motoren (3) in der gleichen Phasenfolge erhalten.

5. Steuer- und Regelvorrichtung nach Anspruch 3, dadurch gekennzeichnet,

   - daß das Steuerglied (10) mindestens einen Steuereingang (15, 15') und mindestens einen Steuerausgang (17, 17') aufweist, wobei der Steuereingang (15, 15') an einen Ausgang des Reglers (6) oder einen Steuerausgang (17, 17') eines vorgeschalteten Steuerglieds (10) anschließbar ist und der Steuerausgang (17, 17') mit einem Steuereingang (15, 15') eines nachgeschalteten Steuerglieds (10) verbindbar ist,
   - daß das Steuerglied (10) einen Ausgang (16) besitzt, der mit einem Eingang des Phasenwendeschalters (11) verbindbar ist, und
   - daß das Steuerglied (10) einen Rückmeldeeingang (20) und einen Rückmeldeausgang (21) aufweist, wobei der Rückmeldeeingang (20) an den Rückmeldeausgang (21) des nachgeschalteten Steuerglieds (10) anschließbar ist und der Rückmeldeausgang (21) mit dem Rückmeldeeingang (20) des vorgeschalteten Steuerglieds (10) verbindbar ist.

6. Verfahren zum Steuern und Regeln des im Inneren eines Gebäudes mit einem großen Anteil von gläsernen Fassadenteilen, durch die die innerhalb des Gebäudes herrschenden Temperaturverhältnisse sehr wesentlich von den klimatischen Bedingungen wie Sonneneinstrahlung abhängig sind, beispielsweise Gewächshauses, herrschenden Raumklimas mit einer Steuer- und Regelvorrichtung, die durch Sensoren zur Erfassung des Raumklimas im Inneren des Gebäudes und zur Erfassung klimatischer Daten in der Umgebung des Gebäudes beeinflußt wird, dadurch gekennzeichnet,

   - daß ein Regler (6) durch den Vergleich von Soll- und Istwerten von Daten des Raumklimas einen durch eine Motor-Laufzeit $T_{Puls}$ gekennzeichneten Stellbefehl für Motoren (3) ermittelt, die dem Öffnen und Schließen von Fenstern (2) dienen,
   - daß dieser Stellbefehl vom Regler (6) an ein erstes Steuerglied (10) übermittelt wird, der aufgrund des Stellbefehls ein Motorrelais (9) ansteuert, das den diesem Steuerglied (10) zugeordneten Motor (3) für eine durch den Regler (6) bestimmte Zeit in Betrieb setzt, und
   - daß das erste Steuerglied (10) nach Ablauf dieser bestimmten Zeit diesen Stellbefehl an ein nachgeschaltetes weiteres Steuerglied (10) weiterleitet, aufgrund dessen das nachgeschaltete Steuerglied (10) den diesem Steuerglied (10) zugeordneten Motor (3) für diese bestimmte Zeit in Betrieb setzt.

7. Verfahren nach Anspruch 6, dadurch gekennzeichnet, daß jedes Steuerglied (10) die im Stellbefehl enthaltene oder mit diesem Stellbefehl verbundene Richtungsinformation einem Phasenwendeschalter (11) zuleitet, der für alle Motoren (3) die Phasenfolge gleichzeitig umschaltet.

8. Verfahren nach Anspruch 7, dadurch gekennzeichnet, daß die Ansteuerung des Phasenwendeschalters (11) beginnt, bevor eines der Motorrelais (9) aktiviert wird, und endet, nachdem die Aktivierung aller Motorrelais (9) beendet ist.

9. Verfahren nach Anspruch 6, dadurch gekennzeichnet, daß Stellbefehle, deren Motor-Laufzeit $T_{Puls}$ einen bestimmten Grenzwert überschreiten, aufgeteilt werden in zwei oder mehr kürzere Teil-Laufzeiten $T_{PulsTeil}$.

10. Verfahren nach einem der Ansprüche 7 bis 9, dadurch gekennzeichnet, daß vom Regler (6) dem ersten Steuerglied (10) und von Steuergliedern (10) nachgeordneten Steuergliedern (10) übermittelte Stellbefehle von den Steuergliedern (10) nur dann als gültige Befehle erkannt und ausgeführt werden, wenn die Dauer eines Stellbefehls größer ist als der Wert einer Störwartezeit.

Fig. 1

Fig. 2

Fig. 3

Fig. 4

Fig. 5

Fig. 6

Fig. 7a

Fig. 7b

Fig. 8